# EUROPEAN PATENT SPECIFICATION

(11) **EP 1 935 557 B1**
(45) Date of publication and mention of the grant of the patent: **26.04.2017**
(21) Application number: 06425846.0
(22) Date of filing: 19.12.2006
(51) Int. Cl.: B23Q 3/06, E05F 11/38

(54) **Process and apparatus for manufacturing frameless windows**
Verfahren und Vorrichtung zur Herstellung rahmenloser Fenster
Procédé et appareil de fabrication de fenêtres sans cadre

(43) Date of publication of application: 25.06.2008
(73) Proprietor: Pilkington Italia S.p.A., 66050 San Salvo (CH) (IT); PEUGEOT CITROËN AUTOMOBILES S.A., 78140 Vélizy Villacoublay (FR)
(72) Inventor: Colicino, Salvatore, 10135 Torino TO (IT); Lomartire, Saverio, 10152 Torino TO (IT); Pulcini, Sergio, 10088 Volpiano TO (IT); Lavernhe, Jerome, 78000 Versailles (FR)
(74) Representative: Ménès, Catherine

(56) References cited:
- EP-A1- 1 123 858
- EP-A2- 0 173 091
- DE-A1- 19 728 580
- DE-A1-102004 015 052

## Description

The present invention relates to a process for manufacturing frameless windows, in particular mobile windows for motor vehicles. The present invention also relates to an apparatus which can be employed for carrying out said process.

WO 01/98613 discloses a process and an apparatus for manufacturing frameless windows which comprise a glass pane, the lower edge of which is fixed by means of adhesives in the slot of one or more holders. These windows, already provided with said holders, are arranged onto a work-table in a substantially horizontal position. A portion of these holders is removed when the windows lie on the work-table, so as to compensate the shape variations of the glass pane with respect to its nominal shape. These shape variations can also be compensated by slightly modifying the mutual position of the pane with respect to the holders by exploiting the minimum gap which is comprised in the slot between the pane and the holders for applying the adhesives between them.

Similar windows and manufacturing arrangements are also disclosed in DE 4340363, FR 2762350, WO 2004/016894, DE 102004015052 A1 **and** EP 173091 A2**.**

However, in all the above mentioned known windows, the possibility of compensating the shape variations of the glass pane is very low since the high precision and the short manufacturing times required for mounting the window do not allow to employ holders with relatively wide slots.

It is therefore an object of the present invention to manufacture frameless windows by compensating in a simple and fast manner their shape variations with respect to the nominal shape. Said object is achieved with a process and an apparatus, the main features of which are disclosed in claims 1 and 22, respectively, while other features are disclosed in the remaining claims.

Thanks to the holders with relatively wide slots which are filled with an adhesive having a high elastic modulus, the window according to the present invention can be manufactured with a high assembly precision and without increasing the manufacturing times and/or complexity. As a matter of fact, said particular adhesive can keep the glass pane in the correct position with respect to the holders also when their slot is much wider than the thickness of the pane.

The manufacturing process of said windows is made simple and fast by means of the apparatus according to the present invention, which is provided with particular mobile supports for perfectly and quickly applying the holders to the glass pane arranged on the work-table. The latter can be rotated before applying the holders for inclining the glass pane in its final position of use, which is substantially vertical, so as to improve the manufacturing precision.

Therefore, said apparatus allows to precisely reproduce and transfer on its work-table the final positions of use of the holders and of the pane thanks to the relevant mobile supports and reference supports, the position of which with respect to the work-table is accurately determined according to said final positions, so as to perfectly assemble the pane even when the latter has shape variations with respect to its nominal shape.

According to a particular aspect of the invention, a strip of adhesive tape is preferably applied along the lower inner edge of the glass pane, so as to prevent its delamination when it is made up of several layers joined to each other.

Further advantages and features of the process and the apparatus according to the present invention will become clear to those skilled in the art from the following detailed and non-limiting description of an embodiment thereof with reference to the attached drawings, wherein:
- figure 1 shows a side view of the window obtained by means of said process;
- figure 2 shows an enlarged view sectioned along plane II-II of figure 1;
- figure 3 shows an enlarged view sectioned along plane III-III of figure 1;
- figure 4 shows a schematic view of the window of figure 3;
- figure 5 shows a top view of the apparatus according to a first operating step of the process;
- figure 6 shows a side view of the apparatus of figure 5;
- figure 7 shows a view perpendicular to the work-table of the apparatus during a second operating step of the process;
- figure 8 shows a side view of the apparatus of figure 7;
- figure 9 shows a view perpendicular to the work-table of the apparatus during a third operating step of the process; and
- figure 10 shows a side view of the apparatus of figure 9.

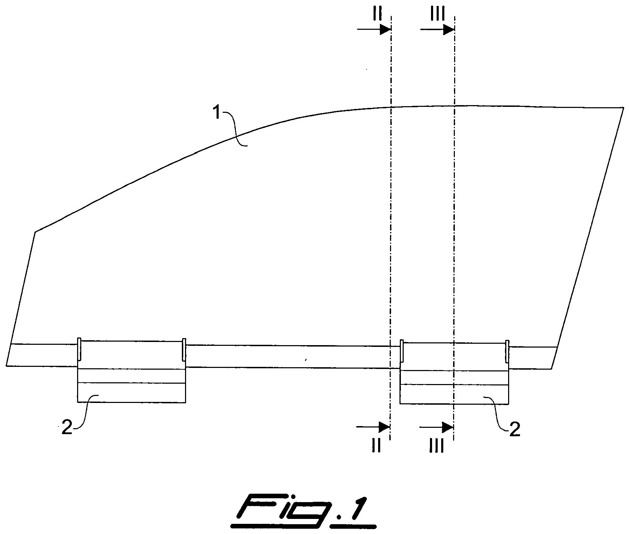

Referring to figure 1, it is seen that the frameless window according to the present invention comprises in a known way a transparent pane, in particular a glass pane 1, generally bent inwards, the lower edge of which is inserted in the slot of one or more holders 2 which are suitable for supporting pane 1 and are provided with coupling members (not shown in the figures) for the mechanical connection to lifting devices, for example arranged in the door of a motor vehicle.

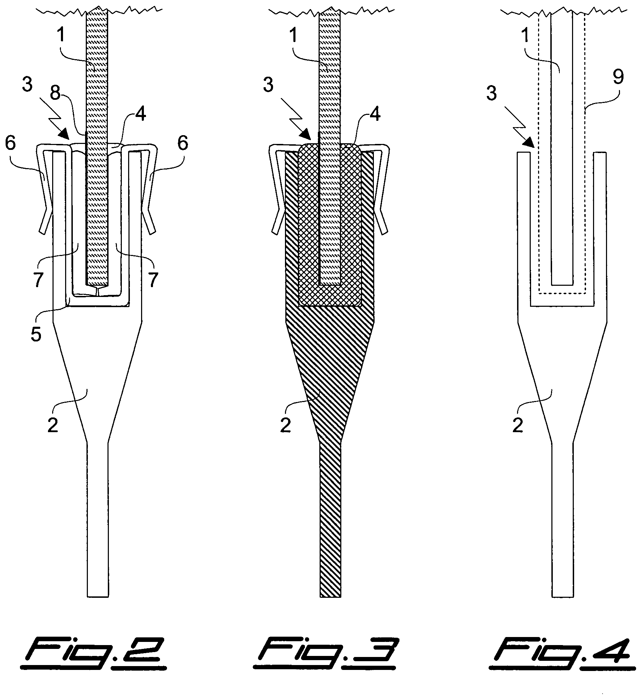

Referring to figures 2 and 3, it is seen that the lower edge of pane 1 is separated from the walls of slot 3 of holders 2 and is joined thereto by means of at least one layer of adhesive 4 applied in said slot before inserting pane 1 therein. A pair of closing members is preferably inserted close to the edges of slot 3 before applying adhesive 4 for avoiding that the latter comes out. Said closing members comprise a U-shaped semirigid member 5, for example made of plastic, having a profile and dimensions complementary to the inner surfaces of slot 3. The ends of the semirigid member 5 are joined to a pair of clips 6 which protrude outside slot 3 and urge against the outer walls of holders 2 for keeping the closing member steady in slot 3. A pair of elastic spacers 7 is fixed in the slot of the semirigid member 5, so that they are pressed between the semirigid member 5 and pane 1 for preventing the leakage of adhesive 4 between them. At least one strip of adhesive tape 8 can be applied along the lower inner edge of the glass pane 1, before the latter is inserted into holders 2.

Referring to figure 4, it is seen that the width of slots 3 of holders 2 is at least twice the thickness of pane 1, so that the latter can be arranged in a variable position within a tolerance zone 9 (shown with broken lines) separated and distant from the inner walls of slots 3. In particular, with a pane 1 having a thickness comprised between 3 and 6 mm, the average width of the tolerance zone 9 is comprised between 6 and 10 mm, while the average width of slot 3 is comprised between 8 and 14 mm. The tolerance zone 9 further includes 1 mm of space downwards, while the average distance between the lower border of the tolerance zone 9 and the bottom of slot 3 is comprised between 1 and 3 mm. The depth of slot 3 is greater than 10 mm, in particular comprised between 31 and 33 mm.

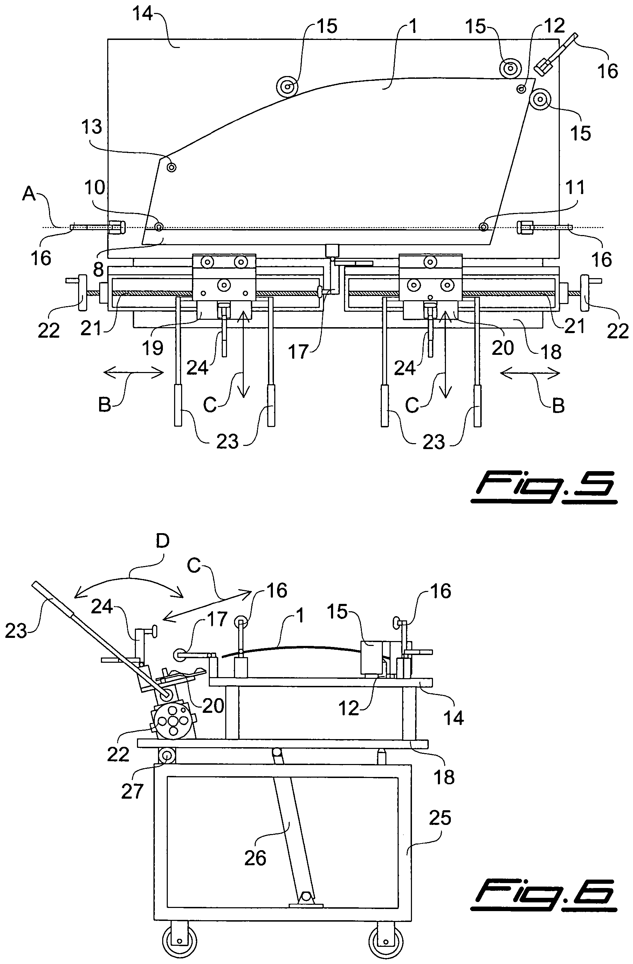

Furthermore, for correctly fixing pane 1 in slot 3 provided with the above tolerance zone 9, adhesive 4 is suitably selected among the adhesives having an elastic modulus comprised between 10 and 90 MPa, preferably between 20 and 70 MPa, in particular between 30 and 50 MPa, at room temperature. Adhesive 4 is preferably a two-component adhesive which can be applied at room temperature, i.e. without heating it. Adhesive 4 has an open time comprised between 3 and 7 minutes and rate of cure lower than 20 minutes for obtaining at least 60% of the final strength, always at room temperature. The density of adhesive 4 is comprised between 1,1 and 1,3 g/cm³, its tensile strength is greater than 8 MPa and the elongation at break is greater than 120%, always at room temperature. Adhesive Sikafast^{®} 5215 of the firm Sika turned out to be particularly suitable for this purpose.
Referring to figures 5 and 6, it is seen that in a first operating step of the process according to the present invention, pane 1, already provided with strip 8, is arranged in a substantially horizontal position with the convex side turned upwards on the apparatus according to the present invention, which comprises in a known manner at least three reference supports 10, 11 and 12. The ends of these reference supports 10, 11 and 12 contacting pane 1 are arranged in three determined points which are in the same position in space of three reference points employed for mounting the window in a motor vehicle. In particular, two reference supports 10, 11 are arranged close to the lower edge of pane 1 along a substantially horizontal axis A, while the third reference support 12 is arranged close to an upper corner of pane 1. A fourth height-adjustable supplementary support 13 can be arranged close to the opposite upper corner of pane 1 for improving the support of pane 1. Supports 10, 11, 12 and 13 are mounted on a work-table 14 together with a plurality of rollers 15 which contain laterally the edges of pane 1. A plurality of lever vices 16 are mounted on work-table 14 for urging pane 1 onto the reference supports 10, 11 and 12. A further lever vice 17 can be mounted on work-table 14 for urging the lower edge of pane 1 toward rollers 15. Work-table 14 is mounted on an inclinable structure 18 on which two mobile supports 19, 20 suitable for moving holders 2 toward the lower edge of pane 1 are arranged. The mobile supports 19, 20 can also run horizontally in the direction of arrows B beside work-table 14 by means of threaded shafts 21 which can be rotated by cranks 22. Furthermore, the mobile supports 19, 20 can be pushed toward work-table 14 or moved away from the latter in the direction of arrows C by pushing or pulling, respectively, levers 23 in the direction of arrow D. The mobile supports 19, 20 are also provided with a plurality of reference supports and a lever vice 24 for locking in a determined position holders 2 on these reference supports. The inclinable structure 18 is in turn mounted on a base 25 in a rotating manner around a substantially horizontal axis, so that work-table 14 can be inclined by means of suitable actuators, for example a piston 26, which rotate the inclinable structure 18 around hinges 27.

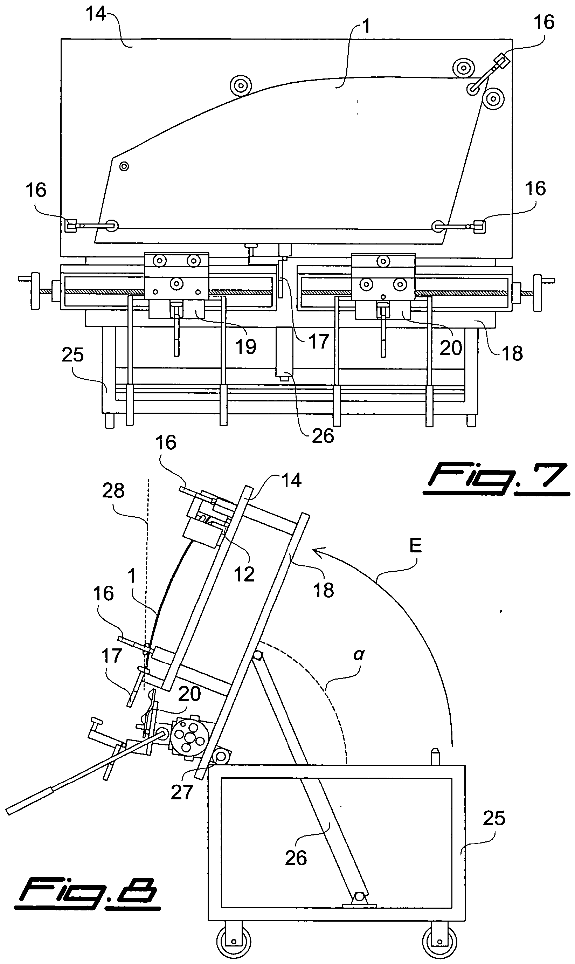

Referring to figures 7 and 8, it is seen that in a second step of the process according to the present invention pane 1 is locked by vices 16 and 17 on work-table 14, which is rotated in the direction of arrow E by piston 26 together with the inclinable structure 18 and the mobile supports 19, 20 until pane 1 is substantially in the same position of the use position of the window, i.e. with the lower edge turned downwards, the upper edge turned upwards and with plane 28 tangent to the lower edge which forms an angle lower than 30°, in particular lower than 5°, with a vertical plane. For this purpose, work-table 14 is rotated with an angle α greater than 60° with respect to a horizontal plane.

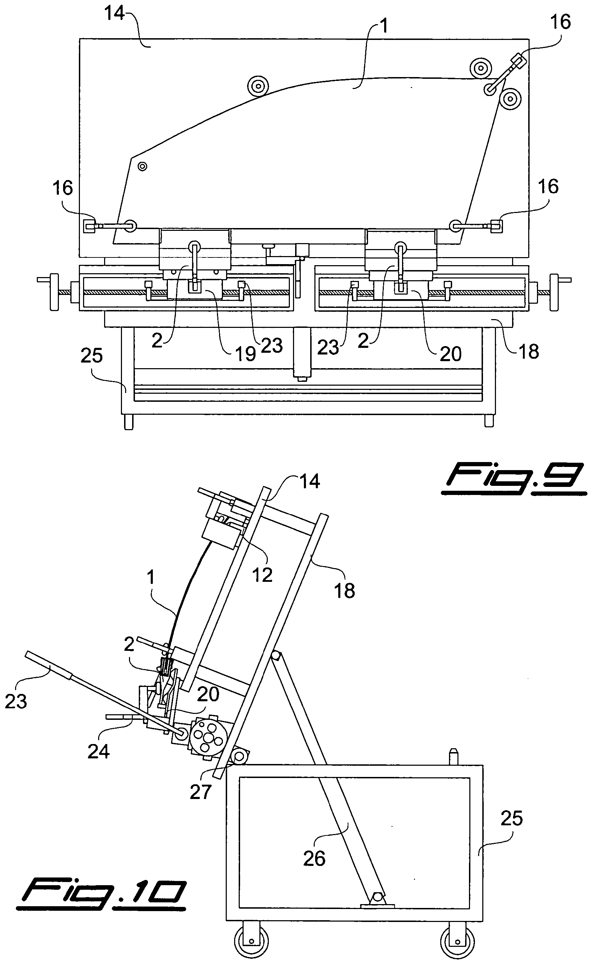

Referring to figures 9 and 10, it is seen that in a third operating step of the process according to the present invention holders 2, already provided with the closing members and with adhesive 4, are locked by the lever vices 24 on the mobile supports 19, 20, after which the latter are moved towards pane 1 by operating levers 23. Thus, holders 2 are inserted astride the lower edge of pane 1 in the use position of the window. When adhesive 4 has reached a suitable cure time, i.e. when adhesive 4 can firmly support holders 2 in their position with respect to pane 1, work-table 14 is rotated in the horizontal position, vices 16, 17 and 24 are opened and pane 1, provided with holders 2, is separated from the apparatus, which is then ready for the manufacture of another window.

## Claims

1. Process for manufacturing frameless windows (1, 2) which comprise a transparent pane (1), the lower edge of which is fixed in the slot (3) of one or more brackets (2) by means of at least one layer of adhesive (4), **characterized in that** it comprises the following operating steps:
- arranging the pane (1) on a work-table (14) of an apparatus as defined by claim 22;
- arranging the brackets (2) on one or more mobile supports (19, 20) suitable for moving toward and from the lower edge of the pane (1) arranged on the work table (14);
- moving the mobile supports (19, 20) toward the lower edge of the pane (1) so that this edge penetrates into the slot (3) of the brackets (2), said adhesive (4) being arranged in this slot (3).

2. Process according to the previous claim, **characterized in that** the pane (1) is arranged on the work-table (14) in a substantially horizontal position.

3. Process according to one of the previous claims, **characterized in that** the work-table (14) provided with the pane (1) is rotated for inclining the pane (1), so that the lower edge of the pane (1) is turned downwards and its upper edge is turned upwards.

4. Process according to the previous claim, **characterized in that** the worktable (14) is rotated with an angle (α) greater than 60° with respect to a horizontal plane.

5. Process according to claim 3 or 4, **characterized in that** the plane (28) tangent to the lower edge of the pane (1) forms an angle lower than 30° with a vertical plane when the pane (1) is inclined.

6. Process according to the previous claim, **characterized in that** the plane (28) tangent to the lower edge of the pane (1) forms an angle lower than 5° with a vertical plane when the pane (1) is inclined.

7. Process according to one of claims 3 to 6, **characterized in that** the brackets (2) are mounted on the mobile supports (19, 20) after the work table (14) has been rotated for inclining the pane (1).

8. Process according to one of the previous claims, **characterized in that** the work-table (14) is rotated in a substantially horizontal position when the adhesive (4) can firmly support the brackets (2) in their position with respect to the pane (1).

9. Process according to one of the previous claims, **characterized in that** one or more closing members (5, 6, 7) for housing the lower edge of the pane (1) and preventing the leakage of the adhesive (4) are inserted in the slot (5 3) of a bracket (2) before inserting the adhesive (4) in this slot (3).

10. Process according to one of the previous claims, **characterized in that** at least one strip of adhesive tape (8) is applied along the lower inner edge of the pane (1) before arranging the latter on the work-table (14).

11. Process according to one of the previous claims, **characterized in that** the mobile supports (19, 20) are mounted on a structure (18) integral with the work-table (14) for rotating with it.

12. Process according to one of the previous claims, **characterized in that** the adhesive (4) has an elastic module comprised between 10 and 90 MPa at room temperature.

13. Process according to the previous claim, **characterized in that** the adhesive (4) has an elastic module comprised between 20 and 70 MPa at room temperature.

14. Process according to the previous claim, **characterized in that** the adhesive (4) has an elastic module comprised between 30 and 50 MPa at room temperature.

15. Process according to one of the previous claims, **characterized in that** the adhesive (4) is a two-component adhesive.

16. Process according to one of the previous claims, **characterized in that** the adhesive (4) is at room temperature when it is applied in the slot (3) of the brackets (2).

17. Process according to one of the previous claims, **characterized in that** the adhesive (4) has an open time comprised between 3 and 7 minutes at room temperature.

18. Process according to one of the previous claims, **characterized in that** the adhesive (4) has a cure time lower than 20 minutes for obtaining at least the 60% of the final strength at room temperature.

19. Process according to one of the previous claims, **characterized in that** the density of the adhesive (4) is comprised between 1,1 and 1,3 g/cm3 at room temperature.

20. Process according to one of the previous claims, **characterized in that** the tensile strength of the adhesive (4) is greater than 8 MPa at room temperature.

21. Process according to one of the previous claims, **characterized in that** the elongation at break of the adhesive (4) is greater than 120% at room temperature.

22. Apparatus for manufacturing frameless windows (1, 2) which comprise a transparent pane (1), the lower edge of which is fixed in the slot (3) of one or more brackets (2) by means of at least one layer of adhesive (4), which apparatus comprises a work-table (14) for supporting the pane (1), the work table (14) also comprising at least three reference supports (10,11,12) for supporting the pane (1) **characterized in that** the apparatus comprises also one or more mobile supports (19, 20) suitable for moving the brackets (2) toward the lower edge of the pane (1) arranged on the work-table (14), so that this edge penetrates into the slot (3) of the brackets (2), and the mobile supports (19, 20) suitable for supporting said brackets (2) and for being moved toward the work-table (14) being mounted on an inclinable structure (18) integral with the work-table (14) and mounted on a base (25) in a rotating manner for rotating with the work-table (14).

23. Apparatus according to the previous claim, **characterized in that** the work-table (14) is arranged in a substantially horizontal position.

24. Apparatus according to claim 22 or 23, **characterized in that** the worktable (14) can be rotated for inclining the pane (1), so that the lower edge of the pane (1) is turned downwards and its upper edge is turned upwards.

25. Apparatus according to the previous claim, **characterized in that** the work-table (14) can be rotated with an angle (α) greater than 60° with respect to a horizontal plane for inclining the pane (1).

26. Apparatus according to claim 24 or 25, **characterized in that** the plane (28) tangent to the lower edge of the pane (1) forms an angle lower than 30° with a vertical plane when the pane (1) is inclined on the work-table (14).

27. Apparatus according to the previous claim, **characterized in that** the plane (28) tangent to the lower edge of the pane (1) forms an angle lower than 5° with a vertical plane when the pane (1) is inclined on the work-table (14).

28. Apparatus according to the previous claim, **characterized in that** two reference supports (10, 11) are arranged close to the lower edge of the pane (1) along a substantially horizontal axis (A).

29. Apparatus according to the previous claim, **characterized in that** the third reference support (12) is arranged close to an upper angle of the pane (1).

30. Apparatus according to the previous claim, **characterized in that** a fourth height-adjustable reference support (13) is arranged close to the upper angle of the pane (1) opposite with respect to the third reference support (12).

31. Apparatus according to one of claims 22 to 30, **characterized in that** a plurality of lever vices (16) are mounted on the work-table (14) for urging the pane (1) onto the reference supports (10, 11, 12).

32. Apparatus according to one of claims 22 to 31, **characterized in that** a lever vice (17) is mounted on the work-table (14) for urging the lower edge of the pane (1) against a plurality of rollers (15) which contain the edges of the pane (1).

33. Apparatus according to one of the claims 22 to 32, **characterized in that** said mobile supports (19, 20) can run horizontally beside the work-table (14).

34. Apparatus according to claim 22 or 33, **characterized in that** said mobile supports (19, 20) are provided with a plurality of reference supports and with one or more lever vices (24) for locking the brackets (2).

## Patentansprüche

1. Verfahren zum Herstellen rahmenloser Fenster (1, 2), die eine durchsichtige Scheibe (1) umfassen, deren Unterkante in dem Schlitz (3) eines oder mehrerer Stützen (2) mittels mindestens einer Schicht aus Klebstoff (4) befestigt ist, **dadurch gekennzeichnet, dass** es die folgenden Vorgehensschritte umfasst:
- Einrichten der Scheibe (1) auf einem Arbeitstisch (14) eines Geräts gemäß Anspruch 22,
- Einrichten der Stützen (2) auf einem oder mehr beweglichen Trägern (19, 20), die zum Bewegen zu und von der Unterkante der Scheibe (1) geeignet sind, die auf dem Arbeitstisch (14) eingerichtet sind,
- Bewegen der beweglichen Träger (19, 20) zu der Unterkante der Scheibe (1) derart, dass diese Kante in den Schlitz (3) der Stützen (2) eindringt, wobei der Klebstoff (4) in diesem Schlitz (3) angeordnet ist.

2. Verfahren nach dem vorhergehenden Anspruch, **dadurch gekennzeichnet, dass** die Scheibe (1) auf dem Arbeitstisch (14) in einer im Wesentlichen horizontalen Position angeordnet ist.

3. Verfahren nach einem der vorhergehenden Ansprüche, **dadurch gekennzeichnet, dass** der Arbeitstisch (14), der mit der Scheibe (1) versehen ist, gedreht wird, um die Scheibe (1) derart zu neigen, dass die Unterkante der Scheibe (1) abwärts gewendet wird, und ihre Oberkante aufwärts gewendet wird.

4. Verfahren nach dem vorhergehenden Anspruch, **dadurch gekennzeichnet, dass** der Arbeitstisch (14) mit einem Winkel (α) größer als 60° in Bezug zu der horizontalen Ebene gedreht ist.

5. Verfahren nach Anspruch 3 oder 4, **dadurch gekennzeichnet, dass** die Ebene (28), die zu der Unterkante der Scheibe (1) tangential ist, einen Winkel kleiner als 30° mit einer vertikalen Ebene bildet, wenn die Scheibe (1) geneigt ist.

6. Verfahren nach dem vorhergehenden Anspruch, **dadurch gekennzeichnet, dass** die Ebene (28), die zu der Unterkante der Scheibe (1) tangential ist, einen Winkel kleiner als 5° mit einer vertikalen Ebene bildet, wenn die Scheibe (1) geneigt ist.

7. Verfahren nach einem der Ansprüche 3 bis 6, **dadurch gekennzeichnet, dass** die Stützen (2) auf die beweglichen Träger (19, 20) montiert werden, nachdem der Arbeitstisch (14) zum Neigen der Scheibe (1) gedreht wurde.

8. Verfahren nach einem der vorhergehenden Ansprüche, **dadurch gekennzeichnet, dass** der Arbeitstisch (14) in eine im Wesentlichen horizontale Position gedreht wird, wenn der Klebstoff (4) die Stützen (2) fest in ihrer Position in Bezug zu der Scheibe (1) tragen kann.

9. Verfahren nach einem der vorhergehenden Ansprüche, **dadurch gekennzeichnet, dass** ein oder mehr Schließelemente (5, 6, 7) zum Aufnehmen der Unterkante der Scheibe (1) und Verhindern des Leckens des Klebstoffs (4) in den Schlitz (5, 3) einer Stütze (2) eingefügt werden, bevor der Klebstoff (4) in diesem Schlitz (3) eingefügt wird.

10. Verfahren nach einem der vorhergehenden Ansprüche, **dadurch gekennzeichnet, dass** mindestens ein Streifen von Klebeband (8) entlang der unteren inneren Kante der Scheibe (1) aufgebracht wird, bevor Letztere auf dem Arbeitstisch (14) angeordnet wird.

11. Verfahren nach einem der vorhergehenden Ansprüche, **dadurch gekennzeichnet, dass** die beweglichen Träger (19, 20) auf eine Struktur (18), die mit dem Arbeitstisch (14) integral ist, zum Drehen mit diesem montiert sind.

12. Verfahren nach einem der vorhergehenden Ansprüche, **dadurch gekennzeichnet, dass** der Klebstoff (4) bei Raumtemperatur ein Elastizitätsmodul zwischen 10 und 90 MPa hat.

13. Verfahren nach dem vorhergehenden Anspruch, **dadurch gekennzeichnet, dass** der Klebstoff (4) bei Raumtemperatur ein Elastizitätsmodul zwischen 20 und 70 MPa hat.

14. Verfahren nach dem vorhergehenden Anspruch, **dadurch gekennzeichnet, dass** der Klebstoff (4) bei Raumtemperatur ein Elastizitätsmodul zwischen 30 und 50 MPa hat.

15. Verfahren nach einem der vorhergehenden Ansprüche, **dadurch gekennzeichnet, dass** der Klebstoff (4) ein Zwei-Komponenten-Klebstoff ist.

16. Verfahren nach einem der vorhergehenden Ansprüche, **dadurch gekennzeichnet, dass** der Klebstoff (4) Raumtemperatur hat, wenn er in dem Schlitz (3) der Stützen (2) aufgebracht wird.

17. Verfahren nach einem der vorhergehenden Ansprüche, **dadurch gekennzeichnet, dass** der Klebstoff (4) bei Raumtemperatur eine Topfzeit zwischen 3 und 7 Minuten hat.

18. Verfahren nach einem der vorhergehenden Ansprüche, **dadurch gekennzeichnet, dass** der Klebstoff (4) bei Raumtemperatur eine Aushärtzeit von weniger als 20 Minuten zum Erhalten von mindestens 60 % der endgültigen Stärke hat.

19. Verfahren nach einem der vorhergehenden Ansprüche, **dadurch gekennzeichnet, dass** die Dichte des Klebstoffs (4) bei Raumtemperatur zwischen 1,1 und 1,3 g/cm3 beträgt.

20. Verfahren nach einem der vorhergehenden Ansprüche, **dadurch gekennzeichnet, dass** die Reißfestigkeit des Klebstoffs (4) bei Raumtemperatur größer als 8 MPa ist.

21. Verfahren nach einem der vorhergehenden Ansprüche, **dadurch gekennzeichnet, dass** die Bruchdehnung des Klebstoffs (4) bei Raumtemperatur größer als 120 % ist.

22. Gerät zum Herstellen rahmenloser Fenster (1, 2), die eine durchsichtige Scheibe (1) umfassen, deren Unterkante in dem Schlitz (3) einer oder mehrerer Stützen (2) mittels mindestens einer Schicht von Klebstoff (4) befestigt ist, wobei das Gerät einen Arbeitstisch (14) zum Tragen der Scheibe (1) umfasst, wobei der Arbeitstisch (14) auch mindestens drei Referenzträger (10, 11, 12) zum Tragen der Scheibe (1) umfasst, **dadurch gekennzeichnet, dass** das Gerät auch einen oder mehrere bewegliche Träger (19, 20) umfasst, die geeignet sind, um die Stützen (2) zu der Unterkante der Scheibe (1), die auf dem Arbeitstisch angeordnet ist, derart zu bewegen, dass diese Kante in den Schlitz (3) der Stützen (2) eindringt, und die beweglichen Träger (19, 20) geeignet sind, um die Stützen (2) zu tragen und um zu dem Arbeitstisch (14) auf einer neigbaren Struktur (18), die mit dem Arbeitstisch (14) integral ist, montiert bewegt zu werden, und auf eine Basis (25) auf eine drehende Art zum Drehen mit dem Arbeitstisch (14) montiert zu werden.

23. Gerät nach dem vorhergehenden Anspruch, **dadurch gekennzeichnet, dass** der Arbeitstisch (14) in einer im Wesentlichen horizontalen Position eingerichtet ist.

24. Gerät nach Anspruch 22 oder 23, **dadurch gekennzeichnet, dass** der Arbeitstisch (14) gedreht werden kann, um die Scheibe (1) derart zu neigen, dass die Unterkante der Scheibe (1) abwärts und ihre Oberkante aufwärts gewendet ist.

25. Gerät nach dem vorhergehenden Anspruch, **dadurch gekennzeichnet, dass** der Arbeitstisch (14) mit einem Winkel (α) größer als 60° in Bezug zu einer horizontalen Ebene zum Neigen der Scheibe (1) gedreht werden kann.

26. Gerät nach Anspruch 24 oder 25, **dadurch gekennzeichnet, dass** die Ebene (28), die zu der Unterkante der Scheibe (1) tangential ist, einen Winkel kleiner als 30° mit einer vertikalen Ebene bildet, wenn die Scheibe (1) auf dem Arbeitstisch (14) geneigt wird.

27. Gerät nach dem vorhergehenden Anspruch, **dadurch gekennzeichnet, dass** die Ebene (28) die zu der Unterkante der Scheibe (1) tangential ist, einen Winkel kleiner als 5° mit einer vertikalen Ebene bildet, wenn die Scheibe (1) auf dem Arbeitstisch (14) geneigt wird.

28. Gerät nach dem vorhergehenden Anspruch, **dadurch gekennzeichnet, dass** zwei Referenzträger (10, 11) nahe an der Unterkante der Scheibe (1) entlang einer im Wesentlichen horizontalen Achse (A) angeordnet sind.

29. Gerät nach dem vorhergehenden Anspruch, **dadurch gekennzeichnet, dass** der dritte Referenzträger (12) nahe an einem oberen Winkel der Scheibe (1) angeordnet ist.

30. Gerät nach dem vorhergehenden Anspruch, **dadurch gekennzeichnet, dass** ein vierter höhenverstellbarer Träger (13) nahe der Oberkante der Scheibe (1), dem dritten Referenzträger (12) entgegengesetzt, angeordnet ist.

31. Gerät nach einem der Ansprüche 22 bis 30, **dadurch gekennzeichnet, dass** eine Vielzahl von Hebelspannern (16) auf den Arbeitstisch (14) montiert ist, um die Scheibe (1) auf die Referenzträger (10, 11, 12) zu drücken.

32. Gerät nach einem der Ansprüche 22 bis 31, **dadurch gekennzeichnet, dass** ein Hebelspanner (17) auf den Arbeitstisch (14) montiert ist, um die Unterkante der Scheibe (1) gegen eine Vielzahl von Walzen (15), die die Kanten der Scheibe (1) enthalten, zu drücken.

33. Gerät nach einem der Ansprüche 22 bis 32, **dadurch gekennzeichnet, dass** die beweglichen Träger (19, 20) horizontal neben dem Arbeitstisch (14) laufen können.

34. Gerät nach Anspruch 22 oder 33, **dadurch gekennzeichnet, dass** die mobilen Träger (19, 20) mit einer Vielzahl von Referenzträgern sowie mit einem oder mehr Hebelspanner(n) (24) zum Blockieren der Stützen (2) versehen sind.

## Revendications

1. Processus de fabrication de fenêtres sans encadrement (1, 2) qui comprennent un panneau transparent (1), dont le bord inférieur est fixé dans la rainure (3) d'un ou plusieurs cadres (2) à l'aide d'au moins une couche d'adhésif (4), **caractérisé en ce qu'**il comprend les étapes fonctionnelles suivantes :
- agencement du panneau (1) sur une table de travail (14) d'un appareil selon la revendication 22 ;
- agencement des cadres (2) sur un ou plusieurs supports mobiles (19, 20) adaptés pour se déplacer vers et depuis le bord inférieur du panneau (1) agencé sur la table de travail (14) ;
- déplacement des supports mobiles (19, 20) vers le bord inférieur du panneau (1) de telle sorte que ce bord pénètre dans la rainure (3) des cadres (2), ledit adhésif (4) étant agencé dans cette rainure (3).

2. Processus selon la revendication précédente, **caractérisé en ce que** le panneau (1) est agencé sur la table de travail (14) dans une position substantiellement horizontale.

3. Processus selon l'une des revendications précédentes, **caractérisé en ce que** la table de travail (14) pourvue du panneau (1) est pivotée pour incliner le panneau (1), de telle sorte que le bord inférieur du panneau (1) est tourné vers le bas et son bord supérieur est tourné vers le haut.

4. Processus selon la revendication précédente, **caractérisé en ce que** la table de travail (14) est pivotée d'un angle (a) supérieur à 60° par rapport à un plan horizontal.

5. Processus selon la revendication 3 ou 4, **caractérisé en ce que** le plan (28) tangent au bord inférieur du panneau (1) forme un angle inférieur à 30° avec un plan vertical quand le panneau (1) est incliné.

6. Processus selon la revendication précédente, **caractérisé en ce que** le plan (28) tangent au bord inférieur du panneau (1) forme un angle inférieur à 5° avec un plan vertical quand le panneau (1) est incliné.

7. Processus selon l'une des revendications 3 à 6, **caractérisé en ce que** les cadres (2) sont montés sur les supports mobiles (19, 20) après que la table de travail (14) a été pivotée pour incliner le panneau (1).

8. Processus selon l'une des revendications précédentes, **caractérisé en ce que** la table de travail (14) est pivotée dans une position substantiellement horizontale quand l'adhésif (4) peut supporter fermement les cadres (2) dans leur position par rapport au panneau (1).

9. Processus selon l'une des revendications précédentes, **caractérisé en ce qu'**un ou plusieurs éléments de fermeture (5, 6, 7) pour loger le bord inférieur du panneau (1) et pour éviter une fuite de l'adhésif (4) sont insérés dans la rainure (5 3) d'un cadre (2) avant l'insertion de l'adhésif (4) dans cette rainure (3).

10. Processus selon l'une des revendications précédentes, **caractérisé en ce qu'**au moins un ruban de bande adhésive (8) est appliqué le long du bord interne inférieur du panneau (1) avant l'agencement de celui-ci sur la table de travail (14).

11. Processus selon l'une des revendications précédentes, **caractérisé en ce que** les supports mobiles (19, 20) sont montés sur une structure (18) intégrée avec la table de travail (14) pour pivoter avec celle-ci.

12. Processus selon l'une des revendications précédentes, **caractérisé en ce que** l'adhésif (4) présente un module d'élasticité compris entre 10 MPa et 90 MPa à température ambiante.

13. Processus selon la revendication précédente, **caractérisé en ce que** l'adhésif (4) présente un module d'élasticité compris entre 20 MPa et 70 MPa à température ambiante.

14. Processus selon la revendication précédente, **caractérisé en ce que** l'adhésif (4) présente un module d'élasticité compris entre 30 MPa et 50 MPa à température ambiante.

15. Processus selon l'une des revendications précédentes, **caractérisé en ce que** l'adhésif (4) est un adhésif bicomposant.

16. Processus selon l'une des revendications précédentes, **caractérisé en ce que** l'adhésif (4) est à température ambiante quand il est appliqué dans la rainure (3) des cadres (2).

17. Processus selon l'une des revendications précédentes, **caractérisé en ce que** l'adhésif (4) a un temps d'ouverture compris entre 3 et 7 minutes à température ambiante.

18. Processus selon l'une des revendications précédentes, **caractérisé en ce que** l'adhésif (4) a un temps de durcissement inférieur à 20 minutes pour obtenir au moins 60 % de la résistance finale à température ambiante.

19. Processus selon l'une des revendications précédentes, **caractérisé en ce que** la densité de l'adhésif (4) est comprise entre 1,1 et 1,3 g/cm³ à température ambiante.

20. Processus selon l'une des revendications précédentes, **caractérisé en ce que** la résistance à la traction de l'adhésif (4) est supérieure à 8 MPa à température ambiante.

21. Processus selon l'une des revendications précédentes, **caractérisé en ce que** l'allongement à la rupture de l'adhésif (4) est supérieure à 120 % à température ambiante.

22. Appareil de fabrication de fenêtres sans encadrement (1, 2) qui comprennent un panneau transparent (1) dont le bord inférieur est fixé dans la rainure (3) d'un ou plusieurs cadres (2) à l'aide d'au moins une couche d'adhésif (4), ledit appareil comprenant une table de travail (14) pour supporter le panneau (1), la table de travail (14) comprenant aussi au moins trois supports de référence (10, 11, 12) pour supporter le panneau (1),
**caractérisé en ce que** l'appareil comprend également un ou plusieurs supports mobiles (19, 20) adaptés pour déplacer les cadres (2) vers le bord inférieur du panneau (1) agencé sur la table de travail (14), de telle sorte que ce bord pénètre dans la rainure (3) des cadres (2), et les supports mobiles (19, 20) adaptés pour supporter lesdits cadres (2) et pour être déplacés vers la table de travail (14) étant montés sur une structure inclinable (18) intégrée avec la table de travail (14) et montée sur une base (25) de manière rotative pour pivoter avec la table de travail (14).

23. Appareil selon la revendication précédente, **caractérisé en ce que** la table de travail (14) est agencée dans une position substantiellement horizontale.

24. Appareil selon la revendication 22 ou 23, **caractérisé en ce que** la table de travail (14) peut être pivotée pour incliner le panneau (1), de telle sorte que le bord inférieur du panneau (1) est tourné vers le bas et son bord supérieur est tourné vers le haut.

25. Appareil selon la revendication précédente, **caractérisé en ce que** la table de travail (14) peut être pivotée d'un angle (a) supérieur à 60° par rapport à un plan horizontal pour incliner le panneau (1).

26. Appareil selon la revendication 24 ou 25, **caractérisé en ce que** le plan (28) tangent au bord inférieur du panneau (1) forme un angle inférieur à 30° avec un plan vertical quand le panneau (1) est incliné sur la table de travail (14).

27. Appareil selon la revendication précédente, **caractérisé en ce que** le plan (28) tangent au bord inférieur du panneau (1) forme un angle inférieur à 5° avec un plan vertical quand le panneau (1) est incliné sur la table de travail (14).

28. Appareil selon la revendication précédente, **caractérisé en ce que** deux supports de référence (10, 11) sont agencés près du bord inférieur du panneau (1) le long d'un axe substantiellement horizontal (A).

29. Appareil selon la revendication précédente, **caractérisé en ce que** le troisième support de référence (12) est agencé près d'un angle supérieur du panneau (1).

30. Appareil selon la revendication précédente, **caractérisé en ce qu'**un quatrième support de référence réglable en hauteur (13) est agencé près de l'angle supérieur du panneau (1) à l'opposé du troisième support de référence (12).

31. Appareil selon l'une des revendications 22 à 30, **caractérisé en ce qu'**une pluralité d'attaches à levier (16) est montée sur la table de travail (14) pour serrer le panneau (1) sur les supports de référence (10, 11, 12).

32. Appareil selon l'une des revendications 22 à 31, **caractérisé en ce qu'**une attache à levier (17) est montée sur la table de travail (14) pour serrer le bord inférieur du panneau (1) contre une pluralité de rouleaux (15) qui contiennent les bords du panneau (1).

33. Appareil selon l'une des revendications 22 à 32, **caractérisé en ce que** lesdits supports mobiles (19, 20) peuvent être agencés horizontalement à côté de la table de travail (14).

34. Appareil selon la revendication 22 ou 33, **caractérisé en ce que** lesdits supports mobiles (19, 20) sont pourvus d'une pluralité de supports de référence et d'une ou plusieurs attaches à levier (24) pour verrouiller les cadres (2).
